# FASCICULE DE BREVET EUROPEEN

(11) **EP 2 549 345 B1**
(45) Date de publication et mention de la délivrance du brevet: **11.06.2014**
(21) Numéro de dépôt: 11175059.2
(22) Date de dépôt: 22.07.2011
(51) Int. Cl.: G05B 19/18, G05B 19/404, G05B 19/408, G05B 19/4093

(54) **Correction des outils**
Korrektur von Werkzeugen
Tool correction

(43) Date de publication de la demande: 23.01.2013
(73) Titulaire: Tornos SA, 2740 Moutier (CH)
(72) Inventeur: Currat, Jacques, 2740 Moutier (CH)
(74) Mandataire: BOVARD AG

(56) Documents cités:
- EP-A1- 2 163 960
- "CNC-Ausbildung für die betriebliche Praxis - Teil 3 : Drehen", 1984, Carl Hanser Verlag, DE, München, XP002662895, ISBN: 3-446-13962-1 * page 136 - page 137 *

## Description

### DOMAINE DE L'INVENTION

L'invention se rapporte à un procédé de correction des outils d'une machine-outil à partir d'une illustration graphique. L'invention se rapporte aussi à un programme d'ordinateur ou à une commande numérique et à un dispositif pour la mise en oeuvre de ce procédé.

### DESCRIPTION DE L'ART ANTERIEUR

Une machine-outil telle qu'une décolleteuse, comprend généralement au moins une broche pour recevoir la pièce à usiner. Celle-ci se présente généralement sous forme d'une barre métallique ou non. Cette ou ces broches sont généralement agencées pour faire tourner la pièce à usiner autour de son axe. L'usinage même est effectué par des outils placés autour de la ou des broches. Le pilotage des machines-outils modernes est généralement contrôlé par une commande numérique.

L'usinage d'une pièce par une machine-outil à commande numérique nécessite un programme d'usinage. Ce programme est généralement établi par l'opérateur ou le programmeur et il décrit les mouvements d'usinage à réaliser et les outils en charge de réaliser ces usinages.

Les commandes numériques de machines-outils utilisent des outils identifiés généralement par un numéro. L'accès à un outil pour en modifier la dimension ou pour y introduire une correction d'usure par exemple nécessite la connaissance de son numéro. Cette connaissance du numéro d'outil est facile pour des machines avec un faible nombre d'outils, mais elle devient fastidieuse et dangereuse (correction du mauvais outil) pour des machines avec un grand nombre d'outils.

EP 2 163 960 concerne un procédé de gestion d'ajustements dans le cadre d'un usinage automatique d'une pièce par une machine. Dans le procédé on fait correspondre des paramètres ajustables avec des caractéristiques spécifiées dans la spécification de la pièce, on convertit automatiquement les ajustements en instructions du programme pièce, et la commande de la machine prend en compte automatiquement les instructions.

La publication intitulée « CNC-Ausbildung für die betriebliche Praxis - Teil 3 : Drehen », 1984, Carl Hanser Verlag, DE München, XP002662895, ISBN : 3-446-13962-1 divulgue un exemple pour une machine pour corriger des données des outils.

L'objet de la présente invention est de surmonter les problèmes liés à l'accès aux outils et à la correction des outils dans les solutions connues.

### RESUME DE L'INVENTION

La présente invention propose donc une solution pour corriger un outil à partir d'un dessin ou d'une liste des cotes comme expliqué plus en détail plus loin.

A cet effet, l'invention a pour objet un procédé de correction des outils d'une machine-outil selon la revendication 1.

La solution proposée permet donc d'accéder aux outils à partir de l'illustration graphique de la pièce et ainsi de ne plus s'intéresser au numéro de l'outil à corriger pour obtenir la bonne dimension de la pièce, mais de s'intéresser seulement à la pièce sans passer par la numérotation des outils. La solution proposée offre ainsi à l'opérateur, une méthode facile et simple pour corriger certaines dimensions de la pièce directement à partir de l'illustration graphique et cela sans s'intéresser à la numérotation des outils. Cette illustration graphique peut être un dessin (montrant les contours) de la pièce ou bien une simple liste des cotes de la pièce comme expliqué plus en détail plus loin.

La solution selon la présente invention exclut aussi la possibilité de choisir un mauvais outil, car il suffit pour l'opérateur d'indiquer une zone ou une cote spécifique sur l'illustration graphique et la machine fait le nécessaire pour que l'opérateur accède à l'outil concerné.

L'invention a également pour objet un programme d'ordinateur agencé pour effectuer le procédé décrit ci-dessus lorsque le programme est exécuté par un ordinateur.

L'invention a également pour objet un dispositif agencé pour effectuer le procédé décrit ci-dessus.

Les autres aspects de la présente invention se trouvent dans les revendications dépendantes.

### BREVE DESCRIPTION DES DESSINS

L'invention sera bien comprise à la lecture de la description ci-après faite à titre d'exemple non limitatif en regardant les dessins ci-annexés qui représentent schématiquement :
- figure 1 : une vue en coupe d'une pièce à usiner avec ses dimensions,
- figure 2 : une vue en coupe de la pièce de la figure 1 avec les outils concernés, et
- figures 3a et 3b : un organigramme qui illustre le procédé pour corriger les outils selon un exemple de la présente invention.

### DESCRIPTION DETAILLEE DES MODES DE REALISATION

En se reportant aux dessins, un procédé de correction des outils d'une machine-outil selon différents aspects conformément à la présente invention est maintenant expliqué plus en détail.

L'objet de l'invention est un procédé pour une machine-outil qui permet de corriger ses outils à partir du dessin de la pièce ou de la liste des cotes de la pièce et ainsi de ne plus s'intéresser au numéro de l'outil à corriger pour obtenir la bonne dimension de la pièce, mais de s'intéresser seulement à la pièce et à la dimension que l'on veut corriger.

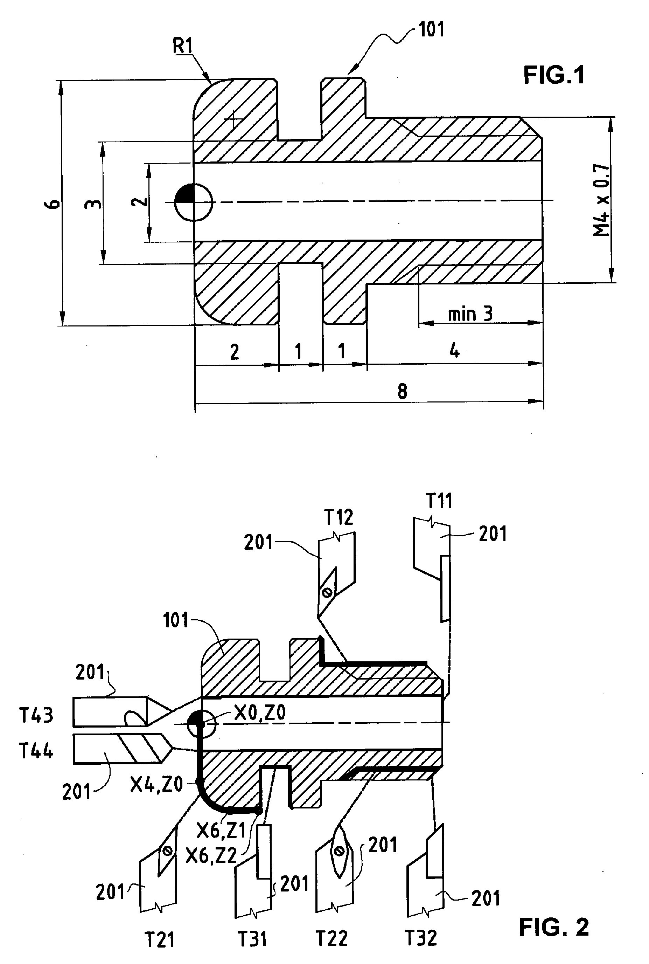

La pièce 101 à usiner est généralement définie par un dessin avec des dimensions (cotes) et des tolérances tel qu'illustré sur la figure 1. Dans cet exemple la pièce est creuse avec un diamètre intérieur de 2 mm et un diamètre extérieur maximum de 6 mm. Ce type de pièce 101 peut être obtenu par décolletage. R1 signifie rayon = 1 mm. M4 signifie un filetage Métrique de 4 mm.

La figure 2 illustre la pièce 101 de la figure 1 mais avec des outils 201 agencés pour usiner des zones spécifiques de la pièce 101. Sur cette figure, différentes zones sont identifiées par différents traits reliés aux outils 201 spécifiques comme bien illustré sur cette figure. Sur cette figure chaque outil 201 a sa propre identification (T12, T11, T22, etc.), mais avec la présente invention ces références ne sont plus nécessaires pour corriger un outil 201 spécifique.

Lors de la programmation de la pièce 101 et en particulier lors de l'affectation des outils aux différents usinages, les zones correspondantes du dessin seront reliées aux outils 201 choisis. Un ou plusieurs outils peut/peuvent être relié(s) à une zone spécifique. Cette procédure permettra, en cours d'usinage, de ne plus introduire les corrections de dimensions de la pièce 101 en sélectionnant un numéro d'outil 201, mais en indiquant la dimension (cote) à corriger sur le dessin de la pièce 101. Le logiciel pourra selon le choix de l'opérateur, interpréter cette correction et l'introduire dans le ou les correcteurs d'outil 201 concernés ou alors afficher les valeurs de l'outil correspondant de manière à ce que l'opérateur puisse y effectuer les modifications désirées. L'opérateur peut donc identifier les outils 201 sans passer par la numérotation, mais directement à partir du dessin de la pièce 101 par exemple.

L'utilisation des relations entre les outils et les cotes de la pièce constituent un des éléments de la présente invention. Ces relations sont partiellement définies lors de l'établissement du programme d'usinage, mais la définition de ces relations doit être complétée par l'opérateur ou le programmeur pour atteindre les objectifs de la présente invention.

En d'autres termes, le programme d'usinage décrit quel outil usine quelle partie du contour de la pièce, mais cette description ne détermine pas quelle cote appartient à quelle partie de contour de la pièce. Par exemple, en se référant aux figures 1 et 2, l'outil T21 effectue un mouvement d'usinage qui part du centre de la pièce (X0, Z0) et se déplace en ligne droite jusqu'à un diamètre de 4 mm (X4, Z0), ensuite il parcourt un arc de cercle de 1 mm de rayon pour arriver au diamètre de 6 mm et à la longueur de 1 mm (X6, Z1) puis une nouvelle ligne droite de 1 mm pour arriver à la longueur de 2 mm (X6, Z2). La cote 2 mm n'est donc pas explicitée dans cet exemple.

D'autre part, la relation entre les outils et les cotes de la pièce peut être simple (un seul outil détermine une cote) ou plus compliquée (la cote dépend de plusieurs outils). Par exemple, en se référant aux figures 1 et 2, la première longueur 1 mm dépend exclusivement de l'outil T31 alors que la longueur 2 mm dépend de l'outil T21 mais aussi de l'outil T31.

En conséquence, l'idée est ici que le système propose les relations trouvées dans le programme comme par exemple dans le cas de l'outil T21 (voir ci-dessus):
- T21 : diamètres 2 mm, 6mm ;
- T21 : longueurs 1 mm, 2 mm.

L'opérateur ou le programmeur peut ensuite modifier ces relations comme par exemple:
- T21 : diamètre 6mm ;
- T21 : longueur 8 mm (longueur de la pièce).

Il peut aussi introduire des relations plus complexes nécessitant par exemple, dans le cas de correction d'outil: l'ajout d'outils supplémentaires et dans le cas de correction de cotes: la demande de mesure d'une cote supplémentaire pour savoir comment interpréter la correction demandée.

Cette procédure permettra, en cours d'usinage, de ne plus introduire les corrections dimensionnelles de la pièce en sélectionnant un numéro d'outil, mais soit:
- en sélectionnant l'outil à corriger en indiquant la portion de contour concernée sur le dessin de la pièce.
- en indiquant la cote à corriger sur le dessin de la pièce. Un algorithme logiciel devra alors interpréter cette correction et introduire les corrections sur les outils concernés.

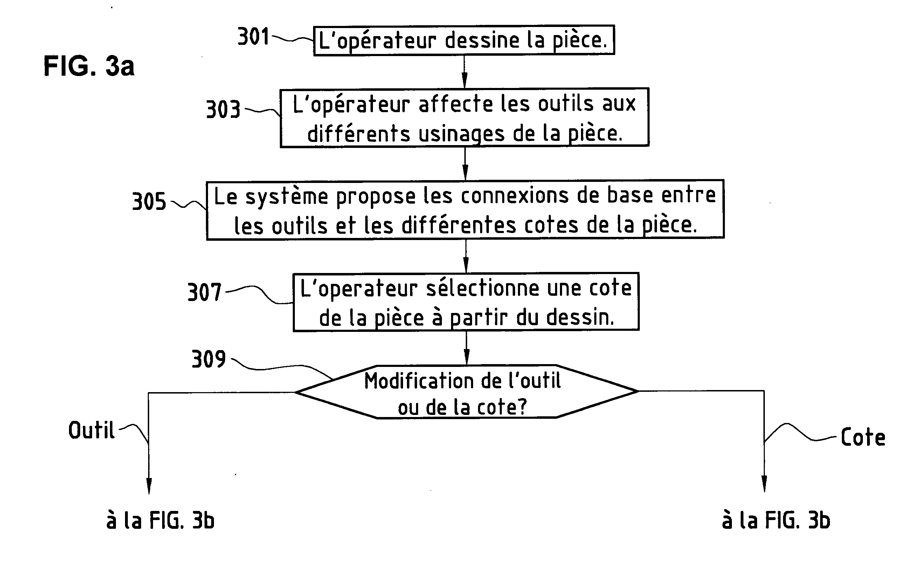

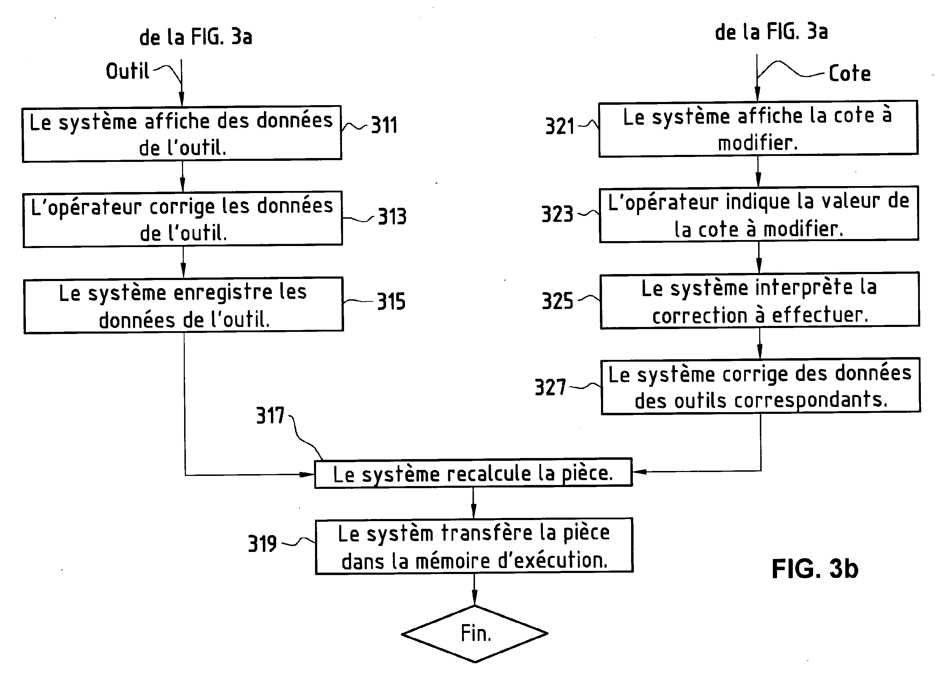

L'organigramme des figures 3a et 3b résume un exemple du procédé décrit ci-dessus. A l'étape 301 le système (qui peut être une sous-entité de la machine-outil) crée, sur la base des instructions de l'opérateur, une illustration graphique de la pièce. Cette illustration graphique montre aussi les cotes de la pièce. Cette illustration graphique est montrée sur la figure 1. A l'étape 303 l'opérateur affecte les outils 201 aux différents usinages de la pièce 101. A l'étape 305, le système propose les connexions de base entre les outils et les différentes cotes de la pièce. Cette proposition qui ne contient pas les relations complexes peut être amendée ou complétée par l'opérateur. Autrement dit, le système relie les outils aux zones correspondant aux différents usinages de la pièce 101. Une zone peut correspondre à une partie du contour de la pièce et une zone spécifique peut aussi comprendre une ou plusieurs cotes de la pièce. Les informations pertinentes pour les étapes 303 et 305 peuvent être sauvegardées dans une base de données.

A l'étape 307 l'opérateur sélectionne une cote de la pièce sur l'illustration graphique. Cette sélection est effectuée par l'opérateur au moyen d'un clic sur une cote de l'illustration graphique. En reprenant l'illustration de la figure 1, l'opérateur peut cliquer sur une des valeurs indiquées. A l'étape 309 le système demande à l'opérateur, s'il veut modifier directement les paramètres d'un outil ou bien s'il veut plutôt modifier la valeur de la cote choisie.

Si l'opérateur choisit la modification d'un outil, le procédé continue à l'étape 311. A cette étape le système affiche des données de l'outil correspondant à la cote choisie à l'étape 307. Lorsque plusieurs outils sont impliqués, le système affiche les données de tous les outils impliqués. On peut par exemple afficher un tableau des valeurs d'au moins un outil correspondant à la cote choisie. Le système sait choisir le bon outil, grâce au fait d'avoir relié les outils aux zones à l'étape 305. A l'étape 313 l'opérateur corrige les données de l'outil et puis à l'étape 315 le système enregistre les données de l'outil.

A l'étape 317 le système recalcule le programme d'usinage de la pièce en fonction des corrections effectuées sur les outils concernés et à l'étape 319 le système transfère la pièce dans la mémoire d'exécution. Après ces étapes le procédé peut être terminé.

Par contre si à l'étape 309 l'opérateur choisit de modifier la cote, le procédé continue à l'étape 321. A cette étape le système affiche la cote à modifier à l'opérateur. A cette étape le système peut demander à l'opérateur, quelle valeur il a mesuré pour la cote choisie. A l'étape 323 l'opérateur indique la valeur de la cote mesurée. Puis à l'étape 325 le système interprète la valeur indiquée par l'opérateur. Donc la machine-outil détermine la correction à effectuer. Un ou plusieurs outils peuvent être impliqués. A l'étape 327 le système corrige les données des outils correspondants. Après l'étape 327 le procédé continue à l'étape 317.

L'organigramme expliqué ci-dessus peut être modifié par exemple en effectuant l'étape 309 tout au début du procédé.

On pourrait aussi envisager plusieurs variations dans les configurations expliquées ci-dessus sans sortir du cadre de la présente invention. Par exemple plusieurs outils peuvent être reliés à une zone spécifique. Aussi l'illustration graphique peut être, au lieu d'un dessin de la pièce, une simple liste des cotes de la pièce à usiner. Dans ce cas, les étapes 301, 303, 305 et 307 sont légèrement différentes par rapport aux étapes illustrées sur la figure 3a. Donc à l'étape 301 l'opérateur établit une liste des cotes de la pièce. En reprenant l'exemple illustré sur la figure 1, au lieu de dessiner la pièce telle qu'illustrée sur la figure 1, on établit la liste suivante :
Diamètres :
   - #1 : 6
   - #2 : 3
   - #3 : 2
   - #4 : R1
   - #5 : M4×0.7
Longueurs :
   - #1 : 8
   - #2 : 2
   - #3 : 1
   - #4 : 1
   - #5 : 4
   - #6 : min 3

A l'étape 303 l'opérateur affecte les outils à chaque ligne de la liste, c.à.d. on affecte les outils aux cotes de la pièce. A l'étape 305 le système relie les outils aux zones correspondant aux différentes cotes. Puis à l'étape 307 l'opérateur sélectionne une cote de la pièce à partir de la liste des cotes. Les autres étapes sont identiques à celles de l'organigramme des figures 3a et 3b. Dans cet exemple l'opérateur peut avoir un dessin en papier pour indiquer la correspondance entre les lignes de la liste des cotes et les différentes parties de la pièce.

## Revendications

1. Un procédé pour un système pour une machine-outil pour corriger au moins un outil (201), le procédé comprend :
• la création (301) d'une illustration graphique de la pièce affichant des cotes de la pièce;
• la création (303, 305) des relations entre différentes zones de ladite illustration graphique et les outils y relatifs dans le système proposant des relations entre les outils et les cotes trouvées dans un programme d'usinage ;
• la réception (307) d'une sélection d'une cote de la pièce, la sélection étant effectuée à partir de l'illustration graphique;
• la réception (313, 323) d'une indication de correction d'au moins une valeur liée à ladite cote choisie; et
• l'enregistrement (315, 327) de la valeur pour l'outil (201) relatif,
**caractérisé en ce que** plusieurs outils (201) sont liés à une zone, et dans lequel les relations proposées sont complétées ou modifiées par l'opérateur.

2. Le procédé selon la revendication 1, dans lequel le procédé comprend, avant la réception d'une indication de correction, l'affichage (311) des données d'au moins un outil (201), ledit outil (201) étant agencé pour effectuer l'usinage pour la cote choisie.

3. Le procédé selon la revendication 1 ou 2, dans lequel ladite valeur est un tableau de paramètres d'un outil agencé pour usiner la zone correspondant à ladite cote.

4. Le procédé selon la revendication 3, dans lequel le procédé comprend la correction (313) d'un ou de plusieurs paramètres dans ledit tableau de paramètres de l'outil concerné et l'enregistrement (315) dudit tableau de paramètres dans une base de données.

5. Le procédé selon la revendication 1 ou 2, dans lequel le procédé comprend en plus l'interrogation (321) concernant la correction liée à la cote choisie.

6. Le procédé selon l'une quelconque des revendications 1, 2 ou 5, dans lequel le procédé comprend en plus l'interprétation (325) de la correction dans le système déterminant, à partir d'une valeur indiquée par l'opérateur, la correction à effectuer.

7. Le procédé selon l'une quelconque des revendications précédentes, dans lequel l'outil (201) est corrigé sans la nécessité pour l'opérateur de déterminer la référence d'un outil (201) concerné.

8. Le procédé selon l'une quelconque des revendications précédentes, dans lequel la zone est une ligne de la liste des cotes de la pièce, ou une partie du contour de la pièce (101) comprenant au moins une indication d'une cote.

9. Le procédé selon l'une quelconque des revendications précédentes, dans lequel le procédé comprend en plus l'interrogation (309) si l'opérateur veut modifier des paramètres d'un outil ou indiquer l'erreur de la pièce par rapport à la cote de l'illustration graphique.

10. Le procédé selon l'une quelconque des revendications précédentes, dans lequel l'étape de la création des relations entre différentes zones de ladite illustration graphique et les outils y relatifs comprend :
• la réception (303) d'une indication comment les outils (201) sont affectés aux différents usinages de la pièce (101) ou comment les outils (201) sont affectés aux cotes de la pièce; et
• la liaison (305) des outils aux zones correspondant aux différents usinages ou cotes de la pièce.

11. Le procédé selon l'une quelconque des revendications précédentes, dans lequel le procédé comprend, après l'enregistrement de la valeur pour ledit outil, le recalcul (317) du programme d'usinage.

12. Un programme d'ordinateur pour une machine-outil, le programme d'ordinateur étant agencé pour exécuter le procédé selon l'une quelconque des revendications précédentes lorsque le programme est exécuté sur un ordinateur.

13. Un dispositif pour corriger au moins un outil (201), le dispositif comprend des moyens pour :
• créer une illustration graphique de la pièce affichant des cotes de la pièce ;
• créer des relations entre différentes zones de ladite illustration graphique et les outils y relatifs dans le dispositif proposant des relations entre les outils et les cotes trouvées dans un programme d'usinage ;
• recevoir une sélection d'une cote de la pièce, la sélection étant effectuée à partir de l'illustration graphique;
• recevoir une indication de correction d'au moins une valeur liée à ladite cote choisie; et
• enregistrer la valeur pour l'outil (201) relatif,
**caractérisé en ce que** le dispositif comprend des moyens pour lier plusieurs outils (201) à une zone et pour agencer les relations proposées afin qu'elles soeint complétées ou modifiées par l'opérateur.

14. Une machine-outil comprenant le dispositif selon la revendication 13.

## Patentansprüche

1. Verfahren für ein System einer Werkzeugmaschine zur Korrektur wenigstens eines Werkzeuges (201), wobei das Verfahren aufweist :
• das Erstellen (301) einer graphischen Darstellung des Werkstückes, welche Dimensionen des Werkstückes zeigt;
• das Erstellen (303, 305) von Relationen zwischen verschiedenen Bereichen der graphischen Darstellung und den Werkzeugen relativ dazu in dem System, wobei Relationen zwischen den Werkzeugen und den in einem Bearbeitungsprogramm gefundenen Dimensionen vorgeschlagen werden;
• das Empfangen (307) einer Auswahl einer Dimension des Werkstückes, wobei die Auswahl ausgehend von der graphischen Darstellung durchgeführt wird;
• das Empfangen (313, 323) einer Korrekturangabe für wenigstens einen Wert, der mit der ausgewählten Dimension verbunden ist; und
• das Erfassen (315, 327) des Wertes für das jeweilige Werkzeug (201),
**dadurch gekennzeichnet, dass** eine Vielzahl von Werkzeugen (201) einem Bereich zugeordnet sind, und wobei die vorgeschlagenen Relationen von dem Anwender ergänzt oder verändert werden.

2. Verfahren nach Anspruch 1, wobei das Verfahren vor dem Empfangen einer Korrekturangabe, das Anzeigen (311) von Daten wenigstens eines Werkzeuges (201) aufweist, wobei das Werkzeug (201) zum Ausführen der Bearbeitung der ausgewählten Dimension ausgebildet ist.

3. Verfahren nach Anspruch 1 oder 2, wobei der Wert eine Parametertabelle eines Werkzeuges ist, das zur Bearbeitung des zugehörigen Bereichs dieser Dimension ausgebildet ist.

4. Verfahren nach Anspruch 3, wobei das Verfahren die Korrektur (313) von einem oder mehreren Parametern der Parametertabelle des entsprechenden Werkzeuges und das Erfassen (315) der Parametertabelle in einer Datenbank umfasst.

5. Verfahren nach einem der Ansprüche 1 oder 2, wobei das Verfahren weiter eine Abfrage (321) bezüglich der mit der ausgewählten Dimension verbundenen Korrektur aufweist.

6. Verfahren nach einem der Ansprüche 1, 2 oder 5, wobei das Verfahren weiter die Interpretation (325) der das System bestimmenden Korrektur umfasst, beginnend mit dem von dem Anwender angegebenen Wert, der die Korrektur ausführt.

7. Verfahren nach einem der vorhergehenden Ansprüche, wobei das Werkzeug (201) korrigiert wird, ohne dass es für den Anwender notwendig ist, die Referenz des betreffenden Werkzeuges (201) zu bestimmen.

8. Verfahren nach einem der vorhergehenden Ansprüche, wobei der Bereich eine Linie in der Liste der Dimensionen des Werkstückes oder Teil der Kontur des Werkstückes (101) ist, die wenigstens eine Dimensionsangabe aufweist.

9. Verfahren nach einem der vorhergehenden Ansprüche, wobei das Verfahren weiter die Abfrage (309) aufweist, ob entweder der Anwender die Parameter des Werkzeuges ändern möchte oder den Fehler des Werkzeuges im Hinblick auf die Dimension der graphischen Darstellung anzeigen will.

10. Verfahren nach einem der vorhergehenden Ansprüche, wobei der Schritt des Erstellens von Relationen zwischen unterschiedlichen Bereichen der graphischen Darstellung und den dazu gehörigen Werkzeugen aufweist :
• das Empfangen (303) einer Angabe wie die Werkzeuge (201) bei unterschiedlicher Bearbeitung des Werkstückes (101) beeinflusst werden oder wie die Werkzeuge (201) an verschiedenen Dimensionen des Werkzeuges beeinflusst werden, und
• die Beziehung (305) der Werkzeuge zu Bereichen entsprechend verschiedener Bearbeitungen oder Dimensionen des Werkstückes.

11. Verfahren nach einem der vorhergehenden Ansprüche, wobei das Verfahren nach dem Erfassen des Wertes für das Werkzeug die Neuberechnung (317) des Bearbeitungsprogramms aufweist.

12. Ein Computerprogramm für eine Werkzeugmaschine, wobei das Computerprogramm zum Ausführen des Verfahrens nach einem der vorhergehenden Ansprüche ausgelegt ist, wenn das Programm auf einen Computer ausgeführt wird.

13. Eine Vorrichtung zur Korrektur wenigstens eines Werkzeuges (201), wobei die Vorrichtung aufweist :
• Mittel zum Erstellen einer graphischen Darstellung des Werkstückes, welche die Dimensionen des Werkstückes darstellt;
• Mittel zur Erstellung von Relationen zwischen unterschiedlichen Bereichen der graphischen Darstellung und der diesbezüglichen Werkzeuge in in der Vorrichtung, wobei Relationen zwischen den Werkzeugen und den in einem Verarbeitungsprogramm gefundenen Dimensionen vorgeschlagen werden;
• Mittel zum Empfangen einer Auswahl einer Dimension des Werkstückes, wobei die Auswahl ausgehend von der graphischen Darstellung durchgeführt wird;
• Mittel zum Empfangen einer Korrekturangabe wenigstens eines Wertes, der mit der ausgewählten Dimension verbunden ist; und
• Mittel zum Erfassen des Wertes für das zugehörige Werkzeug,
**dadurch gekennzeichnet, dass** die Vorrichtung Mittel zum Verbinden mehrerer Werkzeuge (201) zu einem Bereich und zum Erstellen der vorgeschlagenen Relationen aufweist, sodass sie durch den Anwender ergänzt oder geändert sind.

14. Werkzeugmaschine, welche die Vorrichtung gemäss Anspruch 13 aufweist.

## Claims

1. Method for a system for a machine tool for correcting at least one tool (201), the method comprising :
• the creation (301) of a graphic illustration of the piece showing dimensions of the piece ;
• the creation (303, 305) of relations between different zones of said graphic illustration and the tools relative thereto in the system proposing relations between the tools and the dimensions found in a machining program ;
• the receiving (307) of a selection of a dimension of the piece, the selection being carried out starting from the graphic illustration ;
• the receiving (313, 323) of an indication for correction of at least one value connected with the selected dimension ; and
• the registration (315, 327) of the value for the related tool (201),
**characterised in that** a plurality of tools (201) are connected to a zone, and in which the proposed relations are supplemented or modified by the operator.

2. Method according to claim 1, wherein the method comprises, prior to the receiving of an indication for correction, the display (311) of data of at least one tool (201), said tool (201) being designed to carry out the machining for the selected dimension.

3. Method according to claim 1 or 2, wherein the said value is a table of parameters of a tool designed for machining the corresponding zone on the said dimension.

4. Method according to claim 3, wherein the method comprises the correction (313) of one or more parameters in said table of parameters of the tool concerned and the registration (315) of said table of parameters in a database.

5. Method according to claim 1 or 2, wherein the method further comprises the query (321) concerning the correction connected to the selected dimension.

6. Method according to any one of the claims 1, 2 or 5, wherein the method further comprises the interpretation (325) of the correction in the system setting up, beginning with a value indicated by the operator, the correction to be carried out.

7. Method according to any one of the preceding claims, wherein the tool (201) is corrected without the necessity for the operator to determine the reference of a tool (201) concerned.

8. Method according to any one of the preceding claims, wherein the zone is a line in the list of dimensions of the piece, or part of the contour of the piece (101) comprising at least one indication of a dimension.

9. Method according to any one of the preceding claims, wherein the method further comprises the query (309) whether the operator wishes to modify parameters of a tool or indicate the error of the piece with respect to the dimension of the graphic illustration.

10. Method according to any one of the preceding claims, wherein the step of creation of relations between different zones of said graphic illustration and the tools relating thereto comprises:
• the receiving (303) of an indication as to how the tools (201) are affected at different machinings of the piece (101) or how the tools (201) are affected at the dimensions of the piece, and
• the relation (305) of the tools to zones correspondant to different machinings or dimensions of the piece.

11. Method according to any one of the preceding claims, wherein the method comprises, after registration of the value for the said tool, the recalculation (317) of the machining program.

12. A computer program for a machine tool, the computer program being designed to carry out the method according to any one of the preceding claims when the program is carried out on a computer.

13. A device for correcting at least one tool (201), the device comprises means for:
• creating a graphic illustration of the piece displaying dimensions of the piece;
• creating relations between different zones of said graphic illustration and the tools relating thereto in the device proposing relations between the tools and the dimensions found in a machining program ;
• receiving a selection of a dimension of the piece, the selection being carried out beginning from the graphic illustration;
• receiving an indication for correction of at least one value connected to the said selected dimension; and
• registering the value for the related tool (201),
**characterised in that** the device comprises means for connecting several tools (201) to a zone and for arranging the proposed relations so that they are supplemented or modified by the operator.

14. Machine tool comprising the device according to claim 13.
